# EUROPÄISCHE PATENTANMELDUNG

(11) **EP 4 156 368 A1**
(43) Veröffentlichungstag der Anmeldung: **29.03.2023**
(21) Anmeldenummer: 21198932.2
(22) Anmeldetag: 24.09.2021
(51) Int. Cl.: H01M 10/06, H01M 50/204

(54) **SYSTEM BESTEHEND AUS EINER STAPELHILFE UND EINER MEHRZAHL VON AGM-BATTERIEN**

(71) Anmelder: HOPPECKE Batterien GmbH & Co. KG., 59929 Brilon (DE)
(72) Erfinder: KESPER, Heinrich, 34508 Willingen (DE)
(74) Vertreter: Brinkmann & Partner

(57) **Zusammenfassung**

Die Erfindung betrifft ein System bestehend aus einer Stapelhilfe (2) und einer Mehrzahl von in der Stapelhilfe (2) angeordneten AGM-Batterien (3), wobei eine AGM-Batterie (3) ein Gehäuse (4) mit ersten Seitenwänden (5) und im Gehäuse (4) angeordnete Elektrodenplatten aufweist, wobei die ersten Seitenwände (5) und die Elektrodenplatten parallel verlaufend ausgerichtet sind, wobei die Stapelhilfe (2) einen U-förmig ausgebildeten Rundkörper (6) aufweist, der über ein Tragelement (7) und zwei orthogonal hierzu ausgerichtete Wangen (8, 9) aufweist, wobei die Wangen (8, 9) das Tragelement (7) zwischen sich aufnehmen, das einendseitig an der einen Wange (8) und anderendseitig an der anderen Wange (9) angeordnet ist, wobei das Tragelement (7) eine Mehrzahl von in Reihen (10) übereinander angeordneten AGM-Batterien (3) aufnimmt, wobei sowohl das Tragelement (7), als auch die ersten Seitenwände (5) der Gehäuse (4) der AGM-Batterien (3) horizontal verlaufend ausgerichtet sind, und wobei die Stapelhilfe (2) frei von weiteren an den Wangen (8, 9) angeordneten und AGM-Batterien (3) aufnehmenden Tragelementen (7) ausgebildet ist.

## Beschreibung

Die Erfindung betrifft ein System bestehend aus einer Stapelhilfe und einer Mehrzahl von in der Stapelhilfe angeordneten AGM-Batterien. Ferner betrifft die Erfindung eine Stapelhilfe zur Aufnahme von AGM-Batterien.

AGM-Batterien im Allgemeinen sowie Systeme bestehend aus einer Stapelhilfe einerseits und einer Mehrzahl von AGM-Batterien andererseits im Speziellen sind aus dem Stand der Technik an sich bekannt, weshalb es eines gesonderten druckschriftlichen Nachweises an dieser Stelle nicht bedarf. Es sei deshalb auch nur beispielhaft auf die DE 20 2019 105 570 U1 verwiesen, die einen Batterieschrank zur Aufnahme insbesondere von AGM-Batterien offenbart.

Bei AGM-Batterien handelt es sich um wiederaufladbare Batterien, die über in einem Gehäuse angeordnete Elektrodenplatten verfügen. Das Gehäuse ist im Querschnitt rechteckförmig ausgebildet und verfügt über parallel zueinander verlaufende erste Seitenwände einerseits sowie über parallel zueinander verlaufende zweite Seitenwände andererseits. Dabei sind die vom Gehäuse aufgenommenen Elektrodenplatten zu den ersten Seitenwänden des Gehäuses parallel verlaufend ausgerichtet. Die zweiten Seitenwände des Gehäuses verlaufen quer zu den Elektrodenplatten.

Zwischen zwei benachbarten Elektrodenplatten ist jeweils ein als Separator dienendes Vlies angeordnet. Des Weiteren nimmt das Gehäuse einen die Elektrodenplatten umgebenden Elektrolyten auf, wobei dieser im Falle von AGM-Batterien in gebundener Form vorliegt und von den zwischen den Elektrodenplatten befindlichen Vliesen bereitgestellt ist. Die Vliese dienen mithin nicht nur als Separatoren, sondern auch einer Elektrolytbindung.

Der bei AGM-Batterien in gebundener Form vorliegende Elektrolyt macht es in vorteilhafter Weise möglich, AGM-Batterien auch liegend, d. h. auf einer der Seitenwände des Gehäuses lagern zu können, ohne dass die Gefahr eines Elektrolytaustritts aus dem Gehäuse besteht.

Für eine langlebige Verwendbarkeit von AGM-Batterien ist es erforderlich, dass stets ein

Flächenkontakt zwischen den einzelnen Elektrodenplatten und den dazwischen angeordneten und mit Elektrolyt bestückten Vliesen gegeben ist. Um dies sicherzustellen, werden Plattenpakete, bestehend aus den Elektrodenplatten und den dazwischen angeordneten Vliesen, in zusammengepresstem Zustand in das Gehäuse der AGM-Batterie eingesetzt. Im bestimmungsgemäßen Verwendungsfall kann es jedoch aufgrund des sich im Gehäuse ausbildenden Innendrucks zu einem Ausbeulen bzw. Ausbauchung des Gehäuses kommen, was dann trotz zuvor zusammengepresster Plattenpakete dazu führt, dass die zusammengepresste Anordnung der Elektrodenplatten und Vliese nicht weiter aufrechterhalten werden kann. Dies mit dem negativen Effekt, dass der Kontakt zwischen den Elektrodenplatten und den Vliesen nachlässt, wodurch sich eine deutliche Verminderung der Lebenszeit der AGM-Batterie ergibt. Dabei kann der Druck innerhalb eines Gehäuses einer AGM-Batterie insbesondere während eines Ladezykluses steigen, womit es wiederholt zu einer die Lebenszeit reduzierenden Kontaktminderung zwischen Elektrodenplatten und Vliesen kommt. Der Belastungszustand durch die zusammengepressten Vliese ist mithin die Hauptursache für das Ausbauchen der Gehäuse.

Um diesem Problem zu begegnen, ist es bereits vorgeschlagen worden, AGM-Batterien in Regalen liegend zu lagern, wobei die AGM-Batterien in Relation zum Regal derart ausgerichtet sind, dass die Elektrodenplatten parallel zu den Regalböden verlaufend ausgerichtet sind. Dabei sind die AGM-Batterien im bestimmungsgemäßen Verwendungsfall zwischen zwei Regalböden quasi eingeklemmt, wie dies auch mit der schon eingangs genannten DE 20 2019 105 570 U1 vorgeschlagen wird, um einem ungewollten Ausbeulen von Batteriegehäusen entgegenzuwirken.

Vergleichbare Systeme sind ferner aus der US 6,641,951 B1 und der EP 0 922 308 B1 bekannt. Auch hier kommen zur Aufnahme von AGM-Batterien Stapelhilfen zum Einsatz, die davon aufgenommene AGM-Batterien einhausen, wobei Tragelemente in Form von Zwischen- und/oder Einlegeböden vorgesehen sind, die kraftübertragend mit seitlich angeordneten Wangen verbunden sind. Im bestimmungsgemäßen Verwendungsfall sind die AGM-Batterien mithin zumindest zwischen einem Bodenelement und einem Zwischen-und/oder Einlegeboden einerseits und einem Zwischen- und/oder Einlegeboden und einem Deckelelement andererseits eingespannt, womit das Bodenelement, das Deckelelement und der zumindest eine Zwischen- und/oder Einlegeboden einem ungewollten Ausbeulen des Gehäuses einer AGM-Batterie entgegenwirken. Dabei erfolgt im Falle einer Kraftbeaufschlagung des Bodenelements, des Zwischen- und/oder Einlegebodens und/oder des Deckelelements in Folge eines Entgegenwirkens auf eine Gehäuseausbeulung einer AGM-Batterie eine Kraftableitung über die seitlichen Wangen der Stapelhilfe, die kraftübertragend mit dem zumindest einen Zwischen- und/oder Einlegeboden in Wirkverbindung stehen.

Die schon vorgenannte EP 0 922 308 B1 schlägt darüber hinaus einen modularen Aufbau der Stapelhilfe vor, wobei einzelne Module vorgesehen sind, die der jeweiligen Aufnahme von AGM-Batterien dienen. Dabei sind die einzelnen Module kraftübertragend miteinander gekoppelt, wobei zudem auf benachbarte Module einwirkende Druckelemente vorgesehen sind.

Ein ebenfalls modularer Aufbau einer Stapelhilfe ist aus der EP 3 396 733 A1 bekannt. Auch gemäß dieser Konstruktion kommen Druckelemente zum Einsatz, die zwischen in Höhenrichtung übereinander angeordneten Modulen positioniert sind. Dabei ist es der besondere Vorteil der mit der EP 3 396 733 A1 vorgeschlagenen Konstruktion, dass es aufgrund der Modularität ermöglicht ist, eine an die Anforderungen des jeweiligen Einzelfalls auszurichtende Anpassungen vorzunehmen.

Obgleich sich die vorbekannten Systeme und Stapelhilfen im alltäglichen Praxiseinsatz bewährt haben, besteht Verbesserungsbedarf. So haftet den modularen Systemen der immanente Nachteil an, dass eine Vielzahl von unterschiedlichen Baukomponenten und Einzelteilen vorgesehen sind, was sowohl die Herstellung verteuert als auch eine Handhabung insbesondere bei einer Montage erschwert. Darüber hinaus weisen alle vorbekannten Systeme und Stapelhilfe den Nachteil auf, dass sie mittels eines entsprechenden Materialeinsatzes sehr robust ausgebildet sind, insbesondere um zu gewährleisten, dass eine entsprechende Kraftableitung über die seitlichen Wangen erfolgen kann. Der insoweit konstruktionsbedingte hohe Materialeinsatz macht die vorbekannten Stapelhilfen vergleichsweise teuer in der Herstellung. Zudem sind durch die materialintensive Ausgestaltung der Stapelhilfen sowohl die Fertigung als auch die Montage am Aufstellungsort erschwert.

Es ist die der Erfindung zugrundeliegenden **Aufgabe,** ein System beziehungsweise eine

Stapelhilfe der eingangs genannten Art bereitzustellen, die konstruktionsbedingt bei gleichzeitig verbesserter Betriebswirtschaftlichkeit eine vereinfachte Handhabung insbesondere bei einer Montage ermöglichen.

Zur **Lösung** dieser Aufgabe wird mit der Erfindung unter anderem vorgeschlagen ein System, bestehend aus einer Stapelhilfe und einer Mehrzahl von in der Stapelhilfe angeordneten AGM-Batterien, wobei eine AGM-Batterie ein Gehäuse mit ersten Seitenwänden und im Gehäuse angeordnete Elektrodenplatten aufweist, wobei die ersten Seitenwände und die Elektrodenplatten parallel verlaufend ausgerichtet sind, wobei die Stapelhilfe einen U-förmig ausgebildeten Grundkörper aufweist, der über ein Tragelement und zwei orthogonal hierzu ausgerichtete Wangen verfügt, wobei die Wangen das Tragelement zwischen sich aufnehmen, das einendseitig an der einen Wange und anderendseitig an der anderen Wange angeordnet ist, wobei das Tragelement eine Mehrzahl von in Reihen übereinander angeordneten AGM-Batterien aufnimmt, wobei sowohl das Tragelement, als auch die ersten Seitenwände der Gehäuse der AGM-Batterien horizontal verlaufend ausgerichtet sind, und wobei die Stapelhilfe frei von weiteren an den Wangen angeordneten und AGM-Batterien aufnehmende Tragelementen ausgebildet ist.

Des Weiteren wird zur **Lösung** der vorstehenden Aufgabe vorgeschlagen eine Stapelhilfe zur Aufnahme von AGM-Batterien, mit einem U-förmig ausgebildeten Grundkörper, der ein Tragelement und zwei orthogonal hierzu ausgerichtete Wangen aufweist, wobei das Tragelement dazu ausgebildet ist, eine Mehrzahl von in Reihen übereinander angeordneten AGM-Batterien aufzunehmen, wobei die Wangen das Tragelement zwischen sich aufnehmen, das einendseitig an der einen Wange und anderendseitig an der anderen Wange angeordnet ist, und wobei die Stapelhilfe frei von weiteren an den Wangen angeordneten und AGM-Batterien aufnehmende Trageinheiten ausgebildet ist.

Die Besonderheit sowohl des erfindungsgemäßen Systems als auch der erfindungsgemäßen Stapelhilfe ist in dem einfachen und wenig material- und bauteilintensiven Aufbau zu sehen. Dies vereinfacht sowohl die Fertigung als auch die Montage und vergünstigt zudem die Herstellung. Im Ergebnis wird so bei einer gleichzeitig verbesserten Betriebswirtschaftlichkeit eine vereinfachte Handhabung ermöglicht.

Die Stapelhilfe nach der Erfindung nimmt im bestimmungsgemäßen Verwendungsfall eine Mehrzahl von AGM-Batterien auf, die in Reihen übereinander angeordnet sind. Dabei sind die AGM-Batterien allein durch ein Tragelement abgestützt, das in Höhenrichtung zuunterst angeordnet ist, das also die in Reihen übereinander angeordneten AGM-Batterien aufnimmt. Seitlich des Tragelements sind im bestimmungsgemäßen Zustand vertikal ausgerichtete Wangen vorgesehen, die einerseits dazu dienen, dass für die aufeinander aufgestapelten AGM-Batterien ein Herausfallschutz geschaffen ist und die andererseits sicherstellen, dass die im bestimmungsgemäßen Verwendungsfall aufgestapelten AGM-Batterien vor einem ungewollten mechanischen Einfluss von außen geschützt sind. Im Unterschied zum Stand der Technik sind keine weiteren Tragelemente beispielsweise in Form von Zwischen- oder Einlegeböden vorgesehen, die der Aufnahme von AGM-Batterien dienen und kraftübertragend an den Wangen angeordnet sind. Insofern übernehmen die Wangen der erfindungsgemäßen Stapelhilfe keine tragende Funktion, sondern dienen im vorerläuterten Sinne nur als seitlicher Schutz für die von der Stapelhilfe aufgenommenen AGM-Batterien.

Diese erfindungsgemäße Ausgestaltung erbringt in synergetischer Weise im Besonderen zwei Vorteile. Zum einen ist es ermöglicht, die seitlichen Wangen im Unterschied zum Stand der Technik weniger stabil und damit auch weniger materialintensiv ausführen zu können. Dies deshalb, weil die Wange nach der erfindungsgemäßen Ausgestaltung keinerlei Tragfunktion, sondern nur eine seitliche Schutzfunktion übernehmen. Dies führt im Ergebnis zu einer vereinfachten Montage und kostengünstigeren Herstellung. Zum anderen ist darüber hinaus von Vorteil, dass die erfindungsgemäße Ausgestaltung insgesamt über einen nur denkbar einfachen Aufbau verfügt und schlussendlich über nur drei Baukomponenten verfügt, nämlich über zwei Wangen und ein dazwischen angeordnetes Tragelement. Damit ist eine gegenüber dem Stand der Technik deutlich verringerte Anzahl an Baukomponenten erreicht, was gleichfalls die Herstellungskosten senkt und eine Montage vereinfacht.

Die erfindungsgemäße Ausgestaltung macht sich die Erkenntnis zu Nutze, dass die im bestimmungsgemäßen Verwendungsfall von der Stapelhilfe aufgenommenen AGM-Batterien aufgrund ihres Eigengewichts dafür Sorge tragen, dass ein ungewolltes Ausbeulen einzelner Batterie-Gehäuse sicher unterbunden ist. Systemseitig ist mit der Erfindung deshalb auch vorgesehen, dass sowohl das Tragelement als auch die ersten Seitenwände der Gehäuse der AGM-Batterien horizontal verlaufend ausgerichtet sind, wobei die ersten Seitenwände und die Elektrodenplatten parallel zueinander verlaufen. Im bestimmungsgemäßen Verwendungsfall sind mithin die AGM-Batterien in Ausbeulrichtung übereinander angeordnet, wobei eine mögliche Ausbeulung dadurch verhindert ist, dass sich die in Reihen übereinander aufgestapelten AGM-Batterien schwerkraftbedingt gegenübereinander abstützen. Dabei dient das die AGM-Batterien aufnehmende Tragelement als Widerlager, auf dem die AGM-Batterien aufliegen. Da erfindungsgemäß keine Zwischen- und/oder Einlegeböden, d. h. keine weiteren Tragelemente vorgesehen sind, erfolgt auch keine Krafteinleitung in die seitlich ausgebildeten Wangen, sodass diesen im Unterschied zum Stand der Technik keine tragende und/oder abstützende Funktion zukommt.

Insofern übernehmen die nach der Erfindung vorgesehenen Wangen einzig und allein eine die aufgestapelten AGM-Batterien schützende Funktion, und zwar vor ungewollten mechanischen Einflüssen von außen einerseits und vor insbesondere im Erschütterungsfall aus der Stapelhilfe zur Seite unter Umständen ansonsten herausfallenden oder kippenden AGM-Batterien andererseits.

Gemäß einem weiteren Merkmal der Erfindung ist vorgesehen, dass das Tragelement zwei im Querschnitt rechteckförmige Rohre aufweist, die parallel verlaufend ausgerichtet und in Rohrquerrichtung, d. h. in einer Richtung quer zur Rohrlängsrichtung voneinander beabstandet angeordnet sind. Diese beiden rechteckförmigen Rohre dienen quasi als Tragbalken, auf denen im bestimmungsgemäßen Verwendungsfall aufgestapelte AGM-Batterien ruhen. Der Einsatz derartiger Tragbalken ist im Unterschied zu flächenhaft ausgebildeten Tragelementen Ressourcen schonender, insbesondere weniger materialintensiv. Dabei erweisen sich Rechteckrohre zudem besonders vorteilhaft bei der Aufnahme von im bestimmungsgemäßen Belastungsfall auftretenden Biege- und Torsionsbeanspruchungen. Aufgrund der rechteckförmigen Ausgestaltung ist zudem sichergestellt, dass eine in einfacher Weise vorzunehmende Stapelung der über ein im Querschnitt ebenfalls rechteckförmig ausgebildetes Gehäuse verfügenden AGM-Batterien gewährleistet ist.

Gemäß einem weiteren Merkmal der Erfindung ist vorgesehen, dass sich der U-förmig ausgebildete Grundkörper aus zwei L-förmig ausgebildeten Basiskörpern zusammensetzt, wobei ein Basiskörper einen Abschnitt des Tragelements und eine orthogonal hierzu ausgebildete Wange aufweist, wobei der Abschnitt des Tragelements einendseitig an der Wange angeordnet ist.

Gemäß diesem besonders bevorzugten Vorschlag der Erfindung ist vorgesehen, dass sich der U-förmig ausgebildete Grundkörper aus zwei Basiskörpern zusammensetzt, wobei die Basiskörper jeweils L-förmig ausgebildet sind. Dabei sind die Basiskörper vorzugsweise identisch zueinander ausgebildet, sodass es zur Ausbildung eines U-förmig ausgebildeten Grundkörpers ausreichend ist, zwei Basiskörper bestimmungsgemäß miteinander zu verbinden, ohne dabei zwischen Basiskörpern hinsichtlich ihrer Ausgestaltung unterscheiden zu müssen. Die mit der erfindungsgemäßen Ausgestaltung vereinfachte Montage wird hiermit unterstützt.

Ein L-förmig ausgebildeter Basiskörper verfügt über eine Wange einerseits sowie über einen Abschnitt des Tragelements andererseits. Dabei ist es bevorzugt, wenn die beiden Abschnitte des Tragelements zweier L-förmig ausgebildeter Basiskörper in Tragelementlängsrichtung gleich lang ausgebildet sind, die beiden Abschnitte der Basiskörper mithin der Hälfte eines Tragelements entsprechen. Im zusammengesetzten Zustand entsteht so ein in schon vorgeschriebener Weise ausgebildeter U-förmiger Grundkörper, nämlich ein Grundkörper mit einem Tragelement einerseits und zwei daran angeordneten Wangen andererseits.

Der Abschnitt eines Tragelements eines L-förmig ausgebildeten Basiskörpers ist einendseitig an einer Wange angeordnet. Anderendseitig ist der Abschnitt des Tragelements bevorzugter Weise an einem Verbindungsstück angeordnet. Im endmontierten Zustand eines U-förmig ausgebildeten Grundkörpers liegen die beiden Verbindungsstücke der Tragelementabschnitte aneinander an, was in einfacher Weise eine Verbindung der beiden Tragelementabschnitte durch beispielsweise Verschrauben ermöglicht. Im bestimmungsgemäßen Montagefall sind mithin die zu einem U-förmig ausgebildeten Grundkörper gehörenden L-förmig ausgebildeten Basiskörper zunächst auszurichten, und zwar derart, dass die von den jeweiligen Tragelementabschnitten bereitgestellten Verbindungsstücke aneinander liegen. Alsdann sind die beiden L-förmig ausgebildeten Basiskörper durch Verschrauben der aneinander liegenden Verbindungsstücke miteinander zu koppeln. Im Ergebnis ergibt sich ein U-förmig ausgebildeter Grundkörper im Sinne der Erfindung.

Gemäß einem weiteren Merkmal der Erfindung ist vorgesehen, dass der U-förmig ausgebildete Grundkörper ein zum Tragelement korrespondierend ausgebildetes Verlängerungselement aufweist, wobei die beiden Abschnitte des Tragelements das Verlängerungselement zwischen sich aufnehmen, das einendseitig an dem einen Abschnitt und anderendseitig an dem anderen Abschnitt des Tragelements angeordnet ist.

Gemäß dieser bevorzugten Ausführungsform der Erfindung ist ein Verlängerungselement vorgesehen. Dieses dient dazu, die Ausdehnung eines U-förmig ausgebildeten Grundkörpers in Trägerelementlängsrichtung wahlweise verlängern zu können. Es ergibt sich insofern ein modularer Aufbau des U-förmig ausgebildeten Grundkörpers aus zwei L-förmig ausgebildeten Basiskörpern einerseits und einem wahlweise zwischen zwei L-förmig ausgebildeten Basiskörpern anzuordnenden Verlängerungselement andererseits. Dabei ist diese Ausgestaltung insbesondere insofern von Vorteil, als dass eine konstruktive Anpassung eines U-förmig ausgebildeten Grundkörpers an die Anzahl der von der Stapelhilfe insgesamt aufzunehmenden AGM-Batterien ermöglicht ist. Dabei können selbstverständlich nicht nur ein Verlängerungselement, sondern wahlweise mehrere Verlängerungselemente Verwendung finden, sodass eine größenmäßig nahezu beliebige Anpassung der Stapelhilfe an die Anzahl der aufzunehmenden AGM-Batterien gestattet ist. Dabei ist diese in Längsrichtung der Tragelemente beliebige Größenanmessung erfindungsgemäß überhaupt nur deshalb möglich, weil die Wangen der Stapelhilfe keine Tragfunktion übernehmen. Denn anders als aus dem Stand der Technik bekannt, sind keine weiteren Tragelemente beispielsweise in Form von Zwischen-und/oder Einlegeböden an den Wangen angeordnet, die zur Vermeidung eines ungewollten Durchhängens einer erst mit der Erfindung möglichen Verlängerung der Stapelhilfe in Längsrichtung des Trägerelements entgegenstehen würden.

Ein Verlängerungselement ist zu einem Tragelement korrespondierend ausgebildet, stellt mithin zum Anschluss an ein Tragelement ebenfalls ein Verbindungsstück je Tragelement bereit. Zur Montage sind deshalb für eine Verbindung eines Tragelementabschnitts und eines Verlängerungselements die jeweils aneinander zugewandten Verbindungsstücke miteinander zu koppeln, beispielsweise durch Verschrauben.

Im einfachsten Fall verfügt ein Verlängerungselement in Entsprechung der Ausgestaltung eines Trägerelements über zwei rechteckförmig ausgebildete Rohre. Diese sind einendseitig wie anderendseitig jeweils an ein Verbindungsstück angeschlossen. Es können so in einfacher Weise zwischen zwei L-förmig ausgebildete Basiskörper eine beliebige Mehrzahl von Verlängerungselementen zur Ausbildung eines U-förmig ausgebildeten Grundkörpers eingesetzt werden.

Gemäß einem weiteren Merkmal der Erfindung ist ein Versteifungselement vorgesehen, dass die beiden Wangen miteinander oder eine Wange mit dem Tragelement verbindet. Ein solches Versteifungselement sorgt insbesondere dafür, dass eine Wange nicht ungewollt gegenüber einem Tragelement verdreht, insbesondere um eine quer zur Tragelementlängsrichtung verlaufende Drehachse. Das Versteifungselement dient mithin nicht dazu, hinsichtlich der Wangen eine Tragfähigkeit in die Schwerkraftrichtung, d. h. in vertikaler Aufstellrichtung für die AGM-Batterien zu schaffen. Vielmehr dienen die Versteifungselemente einem Verdreh- und Kippschutz der Wangen, und dies in Relation zum Tragelement.

Gemäß einem weiteren Merkmal der Erfindung ist vorgesehen, dass eine Wange in Richtung der anderen Wange weisenden Fortsatz aufweist, der als Anschlag für eine Positionierhilfe dient.

Für eine akkurate und positionsgenaue Ausrichtung der von der Stapelhilfe aufgenommenen AGM-Batterien ist je Wange ein Anschlag vorgesehen, der bevorzugter Weise als Fortsatz ausgebildet ist. Im bestimmungsgemäßen Verwendungsfall dient dieser Fortsatz entweder als Anschlag für eine AGM-Batterie oder für eine Positionierhilfe, die wiederum als gleichzeitiger Anschlag für eine Vielzahl von AGM-Batterien dienen kann.

Mit der Erfindung wird in diesem Zusammenhang ferner vorgeschlagen, dass zwischen zwei in Höhenrichtung aufeinander nachfolgenden Reihen von AGM-Batterien eine Positionierhilfe angeordnet ist. Eine solche Positionierhilfe dient insbesondere dazu, eine in Höhenrichtung obere Batterie-Reihe gegenüber der darunter befindlichen Batterie-Reihe positionsgenau auszurichten. Sofern zwischen sämtlichen Batterie-Reihen jeweils eine Positionierhilfe angeordnet ist, kann so über die gesamte Höhe der Stapelhilfe eine positionsgenaue und sichere Ausrichtung sämtlicher AGM-Batterien erreicht werden.

Die Positionierhilfe ist bevorzugter Weise eine Platte, die mit einem als Anschlag dienenden Fortsatz ausgerüstet ist. Dabei dient der Fortsatz als Anschlag für sämtliche AGM-Batterien, die im bestimmungsgemäßen Verwendungsfall oberhalb der als Positionierhilfe dienenden Platte angeordnet sind. Die Positionierhilfe selbst ist dabei einendseitig sowie anderendseitig mittels der jeweils zugehörigen Wange positionsgenau und -sicher gehalten, womit unter Zwischenordnung der Positionierhilfe auch eine positionsgenaue und -sichere Ausrichtung der AGM-Batterien erreicht ist.

Die Positionierhilfe nimmt im bestimmungsgemäßen Verwendungsfall die in Höhenrichtung darüber angeordneten AGM-Batterien in Schwerkraftrichtung nicht abstützend im Sinne eines Widerlagers auf, sondern dient nur dazu, in der schon vorbeschriebenen Weise die gewünschte Ausrichtung und Positionierung der von der Stapelhilfe aufgenommenen AGM-Batterien sicherzustellen.

Gemäß einem weiteren Merkmal der Erfindung ist vorgesehen, dass die Stapelhilfe zwei U-förmig ausgebildete Grundkörper aufweist, die in Höhenrichtung übereinander angeordnet sind, wobei die dem Tragelement gegenüberliegenden Endabschnitte der Wangen des einen Grundkörpers den dem Tragelement gegenüberliegenden Endabschnitten der Wangen des anderen Grundkörpers zugewandt sind, sodass ein umlaufend geschlossenes Rahmenelement ausgebildet ist.

Gemäß dieser besonders bevorzugten Ausführungsform verfügt eine Stapelhilfe über zwei U-förmig ausgebildete Grundkörper der vorbeschriebenen Art. Dabei sind die Grundkörper im endmontierten Zustand mit ihren offenen Seiten aneinander zugewandt, sodass die in Höhenrichtung übereinander angeordneten Grundkörper einen geschlossenen Rahmen ausbilden. Im bestimmungsgemäßen Verwendungsfall umgibt dieser Rahmen die von der Stapelhilfe insgesamt aufgenommenen AGM-Batterien.

Von besonderem Vorteil dieser Konstruktion ist, dass zwei identisch ausgebildete U-förmige Grundkörper zum Einsatz kommen. Diese werden in vorbeschriebener Weise in einfacher Weise miteinander zu einem Rahmenelement gekoppelt, wobei im Ergebnis dieser Konstruktion eine Stapelhilfe steht, die als Boden ein erstes Tragelement und als quasi Deckel ein zweites Tragelement aufweist. Diese beiden Tragelemente sind einendseitig sowie anderendseitig jeweils über eine gemeinsame Wange miteinander gekoppelt. Dabei dient das im bestimmungsgemäßen Aufstellfall in Höhenrichtung untere Tragelement als tatsächlich tragendes Bauteil, das die von der Stapelhilfe aufgenommenen AGM-Batterien trägt, mithin abstützt. Das in Höhenrichtung obere Tragelement übernimmt indes keine Tragfunktion in diesem Sinne. Es dient vielmehr dem Schutz der von der Stapelhilfe aufgenommenen AGM-Batterien vor einem ungewollten äußeren Einfluss von oben, insbesondere vor einem ungewollten mechanischen Einfluss. Zudem dient dieses Tragelement einem Verdreh- und Kippschutz der seitlichen Wangen. Da die beiden U-förmig ausgebildeten Grundkörper identisch ausgebildet sind, ist eine vereinfachte Montage am Aufstellort gewährleistet. Dabei können beide U-förmig ausgebildeten Grundkörper jeweils aus zwei L-förmig ausgebildeten Basiskörpern bestehen. In diesem Fall verfügt die Stapelhilfe über insgesamt vier L-förmig ausgebildete Basiskörper, wobei zwei dieser Basiskörper zunächst zu einem U-förmig ausgebildeten Grundkörper und alsdann zwei Grundkörper zu einem Rahmenelement zusammen zu setzen sind. Dabei erfolgt eine Verbindung der einzelnen Grund- beziehungsweise Basiskörper vorzugsweise durch Verschrauben, was im Abbaufall auch eine vereinfachte Demontage ermöglicht.

Gemäß einem weiteren Merkmal der Erfindung ist vorgesehen, dass die beiden U-förmig ausgebildeten Grundkörper in Höhenrichtung zueinander verstellbar angeordnet sind. Diese verstellbare Anordnung erlaubt in vorteilhafter Weise eine Höhenanpassung zum Zwecke eines Toleranzausgleichs. Ein solcher Toleranzausgleich kann beispielsweise erforderlich sein, um toleranzbedingte Größenunterschiede der übereinander aufgestapelten Batteriegehäuse ermöglichen zu können. Zwecks relativer Verstellmöglichkeit in Höhenrichtung ist in diesem Zusammenhang gemäß einem weiteren Merkmal der Erfindung vorgesehen, dass die Wangen der übereinander angeordneten Grundkörper über die jeweiligen aneinander zugewandten Stirnseiten zugängliche Kanäle zur Aufnahme von Verbindungsmitteln aufweisen. Derartige Verbindungsmittel können beispielsweise Stangen, Rohre und/oder dergleichen Elemente sein, sodass nach Art eines Rohr-In-Rohr-Systems eine Teleskopierbarkeit gegeben ist. Dabei ist eine hierdurch erreichte Höhenverstellung der beiden übereinander angeordneten U-förmig ausgebildeten Grundkörper aus zweierlei Gründen von Vorteil. Zum einen ist eine Anpassung an die sich ergebende Höhe der übereinander aufgestapelten AGM-Batterien ermöglicht. Eine passgenaue Ausrichtung der Stapelhilfe in Abhängigkeit etwaiger toleranzbedingter Höhenunterschiede ist damit sichergestellt. Zum anderen ist durch die relative Verfahrbarkeit in Höhenrichtung der beiden U-förmig ausgebildeten Grundkörper sichergestellt, dass das Gewicht des in Höhenrichtung oberen U-förmigen Grundkörpers schwerkraftbedingt auf die zuoberst angeordnete AGM-Batterien-Reihe einwirkt. Ein ungewolltes Gehäuseausbeulen dieser Batterien ist damit verhindert, obgleich oberhalb dieser obersten Batterie-Reihe keine weitere Batterie-Reihe angeordnet ist. Dabei erfolgt im Unterschied zum Stand der Technik über das zuoberst angeordnete Tragelement keine Krafteinleitung in die seitlichen Wangen, sondern das gesamte Gewicht der übereinander gestapelten AGM-Batterien sowie das Gewicht des in Höhenrichtung oberen U-förmig ausgebildeten Grundkörpers ruhen der Gewichtskraft folgend auf dem in Höhenrichtung unteren Tragelement des diesbezüglichen Grundkörpers.

Gemäß einem weiteren Merkmal der Erfindung ist vorgesehen, dass die tragelementseitigen Stirnseiten der Wangen und/oder die Tragelemente auf ihrer den Wangen abgewandten Flachseiten zur insbesondere lösbaren Anordnung von Abstandshaltern Verbindungsanschlüsse aufweisen. Derartige Verbindungsanschlüsse können insbesondere dazu dienen, das in Höhenrichtung untere Tragelement der Stapelhilfe mit als Tragfüßen dienenden Abstandshaltern auszurüsten. Gleichfalls können die dem Boden am Aufstellungsort zugewandten Stirnseiten der seitlichen Wangen entsprechend ausgerüstet werden. Es ist so eine zum Boden am Aufstellungsort beabstandete Anordnung der Stapelhilfe gewährleistet, was insbesondere aus Transportgründen von Vorteil ist, da es die Beabstandung zum Boden am Aufstellungsort ermöglicht, Hubgabeln unterhalb des unteren Tragelements im Bedarfsfall positionieren zu können.

Gemäß einem weiteren Merkmal der Erfindung ist vorgesehen, dass die Abschnitte eines Tragelements mit der zugehörigen Wange verschraubt sind. Auch hierdurch ist in schon vorbeschriebener Weise eine vereinfachte Montage aber auch Demontage erreicht.

Weitere Merkmale und Vorteile der Erfindung ergeben sich aus der nachfolgenden Beschreibung anhand der Figuren. Dabei zeigen
- Fig. 1: in schematisch perspektivischer Darstellung eine erfindungsgemäße Stapelhilfe;
- Fig. 2: in schematisch perspektivischer Darstellung einen U-förmig ausgebildeten Grundkörper;
- Fig. 3: in schematisch perspektivischer Darstellung ein erfindungsgemäßes System mit einer teilbestückten Stapelhilfe;
- Fig. 4: in schematisch perspektivischer Darstellung ein erfindungsgemäßes System mit einer vollbestückten Stapelhilfe;
- Fig. 5: in schematisch perspektivischer Darstellung einen ersten U-förmig ausgebildeten Grundkörper gemäß einer zweiten Ausführungsform;
- Fig. 6: in schematisch perspektivischer Darstellung einen zweiten U-förmig ausgebildeten Grundkörper gemäß der zweiten Ausführungsform;
- Fig. 7: einen L-förmig ausgebildeten Basiskörper gemäß der zweiten Ausführungsform;
- Fig. 8: in schematisch perspektivischer Darstellung eine erfindungsgemäße Stapelhilfe gemäß der zweiten Ausführungsform;
- Fig. 9: in schematisch perspektivischer Darstellung ein erfindungsgemäßes System mit einer teilbestückten Stapelhilfe gemäß der zweiten Ausführungsform;
- Fig. 10: in schematisch perspektivischer Darstellung ein erfindungsgemäßes System mit einer vollbestückten Stapelhilfe gemäß der zweiten Ausführungsform;
- Fig. 11: in schematisch perspektivischer Darstellung ein Verlängerungselement;
- Fig. 12: in schematisch perspektivischer Darstellung eine Positionierhilfe;
- Fig. 13: in schematisch perspektivischer Darstellung eine Stapelhilfe gemäß einer dritten Ausführungsform;
- Fig. 14: in schematisch perspektivischer Darstellung ein erfindungsgemäßes System mit einer teilbestückten Stapelhilfe gemäß der dritten Ausführungsform und
- Fig. 15: in schematisch perspektivischer Darstellung ein erfindungsgemäßes System mit einer teilbestückten Stapelhilfe gemäß der dritten Ausführungsform.

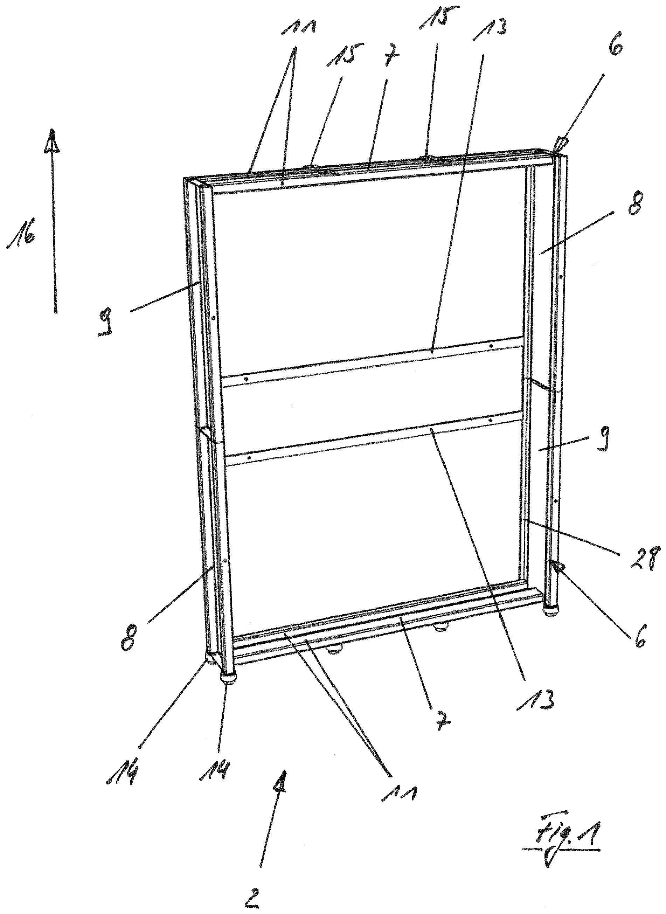

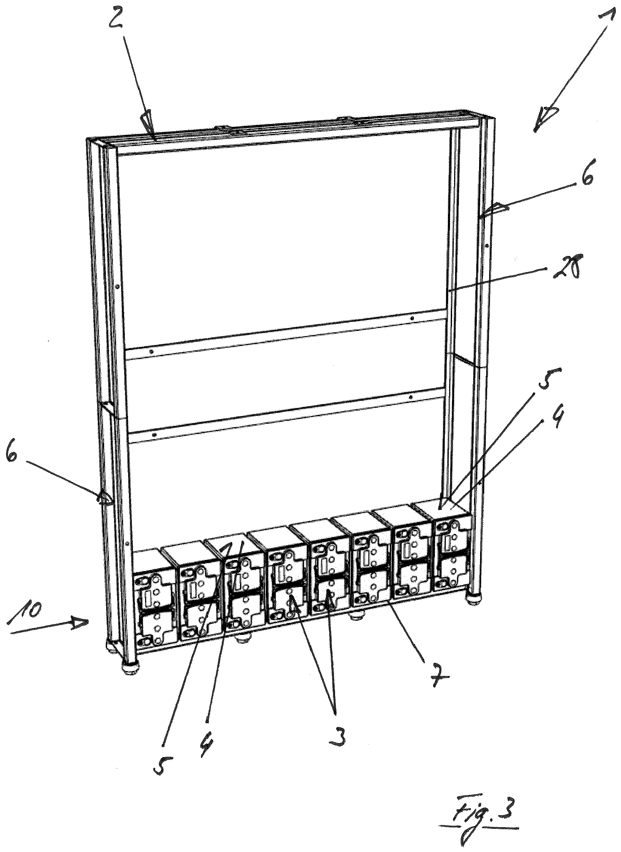

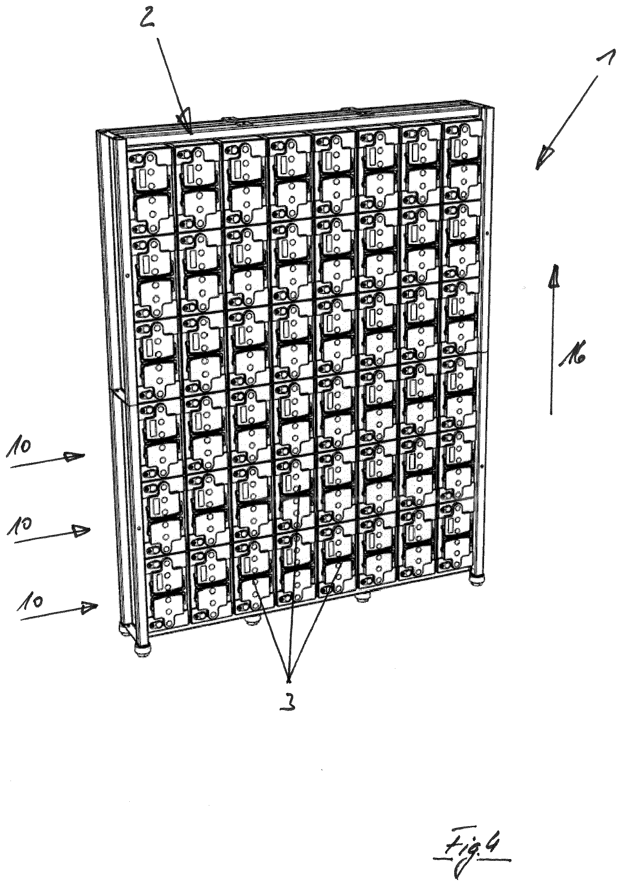

Figur 1 lässt in schematisch perspektivischer Darstellung eine erfindungsgemäße Stapelhilfe 2 erkennen, die im bestimmungsgemäßen Verwendungsfall der Aufnahme einer Mehrzahl von AGM-Batterien 3 dient, wie dies beispielsweise die Figuren 3 und 4 erkennen lassen, die jeweils ein erfindungsgemäßes System 1 zeigen.

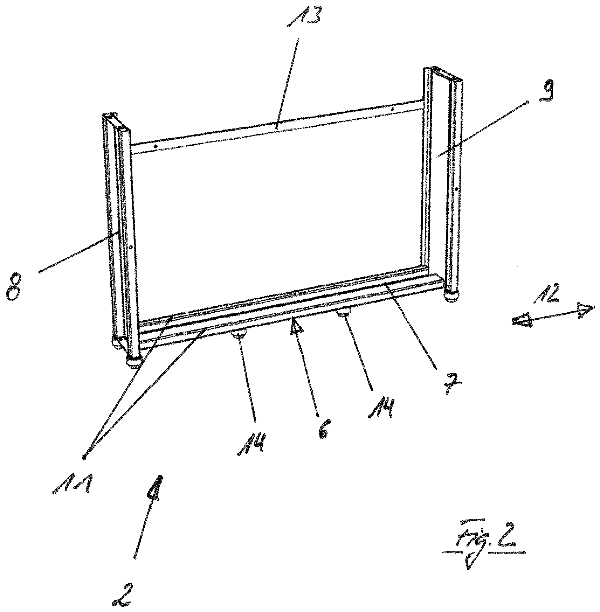

Die Stapelhilfe 2 nach Figur 1 verfügt über zwei in Höhenrichtung 16 übereinander angeordnete U-förmig ausgebildete Grundkörper 6, von denen einer in schematisch perspektivischer Darstellung in Figur 2 in Alleindarstellung gezeigt ist.

Wie die Darstellung nach Figur 2 erkennen lässt, verfügt ein U-förmig ausgebildeter Grundkörper 6 über eine Tragelement 7, das zwischen zwei Wangen 8 und 9 angeordnet ist. Dabei ist das Tragelement 7 einendseitig an der Wange 8 und anderendseitig an der Wange 9 angeordnet. Im endmontierten Zustand des Tragelements 7 und den Wangen 8 und 9 ist so ein Grundkörper 6 ausgebildet, der U-förmig ausgebildet ist.

Das Tragelement 7 verfügt im gezeigten Ausführungsbeispiel über zwei im Querschnitt rechteckförmig ausgebildete Rohre 11. Diese beiden Rohre 11 sind in einer Richtung quer zur Rohrlängsrichtung 12 beabstandet voneinander angeordnet, bilden mithin einen Spaltraum zwischen sich aus.

Zum Zwecke einer vereinfachten Montage sind die Rohre 11 des Tragelements 7 jeweils endseitig mit den zugehörigen Wangen 8 und 9 verschraubt. Alternativ kann auch insbesondere ein stoffschlüssiges Verbinden durch Verschweißen vorgesehen sein, insbesondere im Falle einer herstellerseitigen Vormontage. Am Aufstellungsort sind dann zur Ausbildung der in Figur 1 gezeigten Stapelhilfe 2 nur noch zwei Grundkörper 6 in Entsprechung der Ausgestaltung nach Figur 2 in Höhenrichtung 16 übereinander anzuordnen.

Um eine zusätzliche Stabilisierung der Wangen 8 und 9 vor einem ungewollten Verdrehen in Relation zum Tragelement 7 mit Bezug auf die Zeichnungsebene beispielsweise nach Figur 2 nach links oder rechts zu unterbinden, ist ferner ein Versteifungselement 13 vorgesehen. Dies ist im gezeigten Ausführungsbeispiel als einfaches Flachmaterial ausgebildet, das die beiden Wangen 8 und 9 miteinander koppelt.

Wie eine Zusammenschau insbesondere der Figuren 1 und 2 erkennen lässt, ist ein Tragelement 7 auf seiner in Höhenrichtung den jeweils zugehörigen Wangen 8 und 9 abgewandten Flachseite mit Verbindungsanschlüssen 15 ausgerüstet. Diese Verbindungsanschlüsse 15 dienen insbesondere zur auswechselbaren Anordnung von als Füßen dienenden Abstandshaltern 14. Dabei ist im zusammengebauten Zustand der Stapelhilfe 2 nur das in Höhenrichtung 16 untere Tragelement 7 mit entsprechenden Abstandshaltern 14 ausgerüstet, wie insbesondere die Darstellung nach Figur 1 erkennen lässt. Die Verbindungsanschlüsse 15 des in Höhenrichtung 16 oberen Tragelements 7 bleiben ungenutzt.

Über entsprechende Verbindungsanschlüsse 15 verfügen auch die Stirnseiten der Wangen 8 und 9, wobei im endmontierten Zustand die dem Boden am Aufstellort zugewandten Stirnseiten der Wangen 8 und 9 mit entsprechenden Abstandshaltern 14 ausgerüstet sind, wie dies Figur 1 erkennen lässt.

Wie eine Zusammenschau der Figuren 3 und 4 zeigt, nimmt die Stapelhilfe 2 im bestimmungsgemäßen Verwendungsfall eine Mehrzahl von in Reihen 10 in Höhenrichtung 16 übereinander angeordnete AGM-Batterien 3 auf. Dabei verfügt eine jede AGM-Batterie 3 über ein Gehäuse 4 mit ersten Seitenwänden 5. Im Gehäuse 4 einer jeden AGM-Batterie 3 sind unter anderem Elektrodenplatten angeordnet, wobei die ersten Seitenwände 5 und die Elektrodenplatten parallel verlaufend ausgerichtet sind. Im bestimmungsgemäßen Stapelfall, wie er in den Figuren 3 und 4 dargestellt ist, sind die AGM-Batterien 3 liegend übereinandergestapelt, wobei die ersten Seitenwände 5 der jeweiligen Gehäuse 4 ebenso wie die die AGM-Batterien 3 abstützenden Tragelemente 7 horizontal ausgerichtet sind. Diese Ausrichtung sorgt dafür, dass es einerseits nicht aufgrund der Vorspannung der AGM-Separatoren zu einem Gehäuseausbeulen in Höhenrichtung 16 kommt und dass es andererseits auch im bestimmungsgemäßen Aufladefall einer AGM-Batterie nicht zu einem möglichen Gehäuseausbeulen in Höhenrichtung 16 kommt.

Einem solchen ungewollten Gehäuseausbeulen wirkt die erfindungsgemäße Ausgestaltung erfolgreich dadurch entgegen, dass die von der Stapelhilfe 2 aufgenommenen AGM-Batterien 3 in Höhenrichtung 16 übereinander angeordnet sind, sodass allein aufgrund des Eigengewichts einer jeden AGM-Batterie 3 der Schwerkraft folgend ein Zusammendrücken derart stattfindet, dass einem ungewollten Gehäuseausbeulen sicher entgegengewirkt ist. Dabei ist erfindungsgemäß vorgesehen, dass die Stapelhilfe 2 über keine weiteren Tragelemente 7 verfügt, die AGM-Batterien 3 aufnimmt und kraftübertragend mit den Wangen 8 beziehungsweise 9 gekoppelt ist. Sämtliche AGM-Batterien ruhen mithin der Schwerkraft folgend allein auf dem in Höhenrichtung 16 unteren Tragelement 7, wie dies eine Zusammenschau insbesondere der Figuren 3 und 4 erkennen lässt. Die Wangen 8 und 9 übernehmen insofern keinerlei Tragfunktion und dienen nur zur Sicherung der von der Stapelhilfe 2 aufgenommenen Batterien 3 vor einem ungewollten seitlichen Herausfallen beispielsweise in Folge einer Erschütterung oder vor ungewollten mechanischen Kraftbeaufschlagungen von außen.

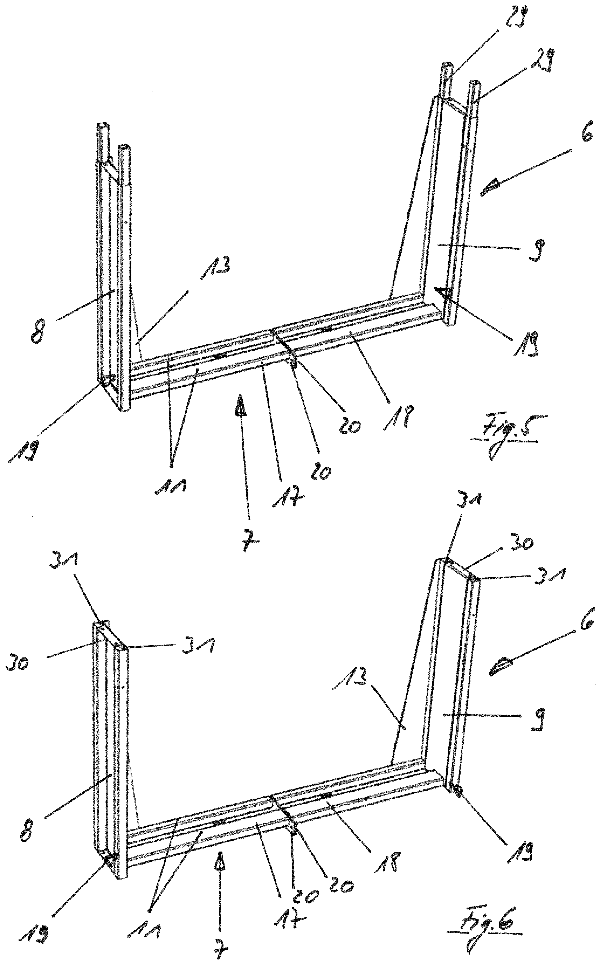

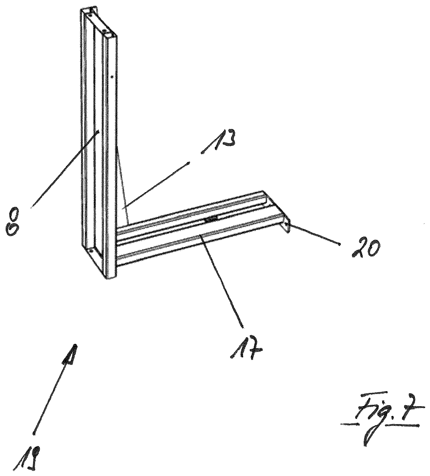

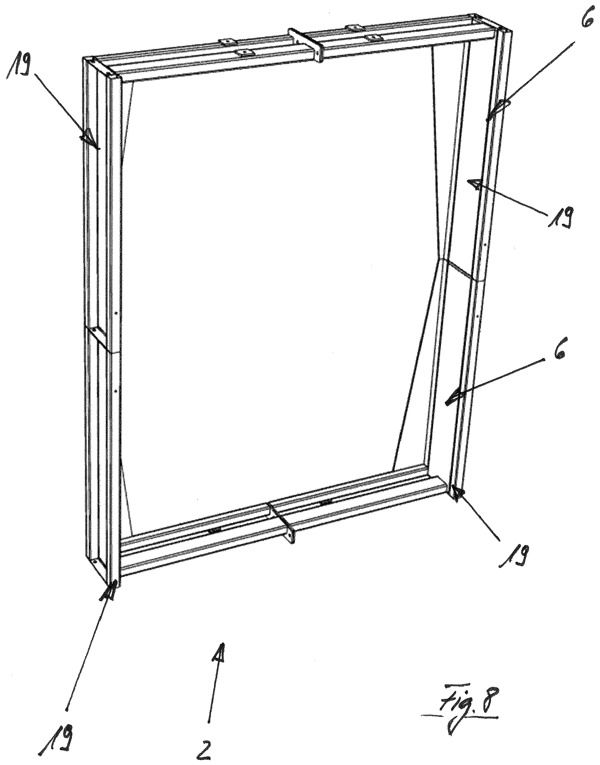

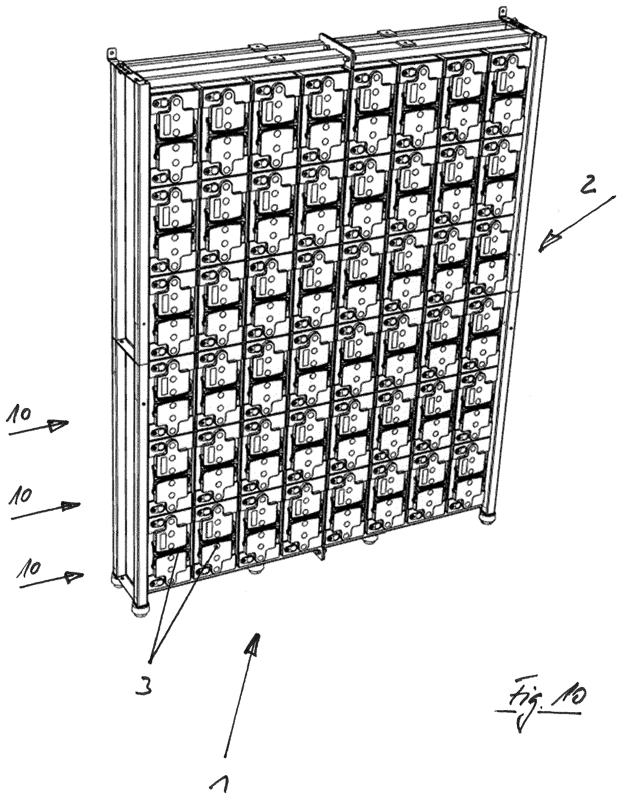

Eine zweite Ausführungsform der erfindungsgemäßen Stapelhilfe 2 beziehungsweise des erfindungsgemäßen Systems 1 lassen die Figuren 5 bis 10 erkennen. Danach ist vorgesehen, dass ein U-förmig ausgebildeter Grundkörper 6 aus zwei L-förmig ausgebildeten Basiskörpern 19 zusammengesetzt ist, wobei Figur 7 einen solchen Basiskörper 19 zeigt.

Ein Basiskörper 19 stellt eine Wange 8 beziehungsweise 9 sowie einen Abschnitt 17 beziehungsweise 18 eines Tragelements 7 bereit. Im endmontierten Zustand zweier L-förmig ausgebildeter Basiskörper 19 ergibt sich ein U-förmig ausgebildeter Grundkörper 6, wie in den Figuren 5 und 6 dargestellt.

Die Abschnitte 17 beziehungsweise 18 eines Tragelements 7 sind einendseitig an der zugehörigen Wange 8 beziehungsweise 9 angeordnet und tragen anderendseitig ein Verbindungsstück 20. Dieses Verbindungsstück ist im gezeigten Ausführungsbeispiel als Flachmaterial ausgebildet und ermöglicht zur Verbindung zweier L-förmig ausgebildeter Basiskörper 19 eine Verschraubung, wie dies ebenfalls insbesondere durch die Darstellung nach den Figuren 5 und 6 zu erkennen ist.

Für einen Verdreh- und/oder Kippschutz der Wangen 8 und 9 kommt gemäß der zweiten Ausführungsform ein dreieckförmig ausgebildetes Versteifungsblech 13 zum Einsatz, das einen Trägerelementabschnitt 17 beziehungsweise 18 mit der zugehörigen Wange 8 beziehungsweise 9 koppelt, wie dies eine Zusammenschau der Figuren 5 bis 7 erkennen lässt.

Zur Anordnung zweier U-förmig ausgebildeter Grundkörper 6 kommen Verbindungsmittel 29 zum Einsatz, wie dies beispielhaft Figur 5 erkennen lässt. Die Verbindungsmittel 29 sind gemäß diesem Ausführungsbeispiel als Vierkantrohre ausgebildet. Sie greifen im endmontierten Zustand in Kanäle 31 der Grundkörper 6 ein, die über die jeweilige Stirnseite 30 zugänglich sind. Im endmontierten Zustand ist so eine Teleskopierbarkeit zwei in Richtung 16 übereinander angeordneter Grundkörper 6 ermöglicht, was insbesondere einen Toleranzausgleich ermöglicht.

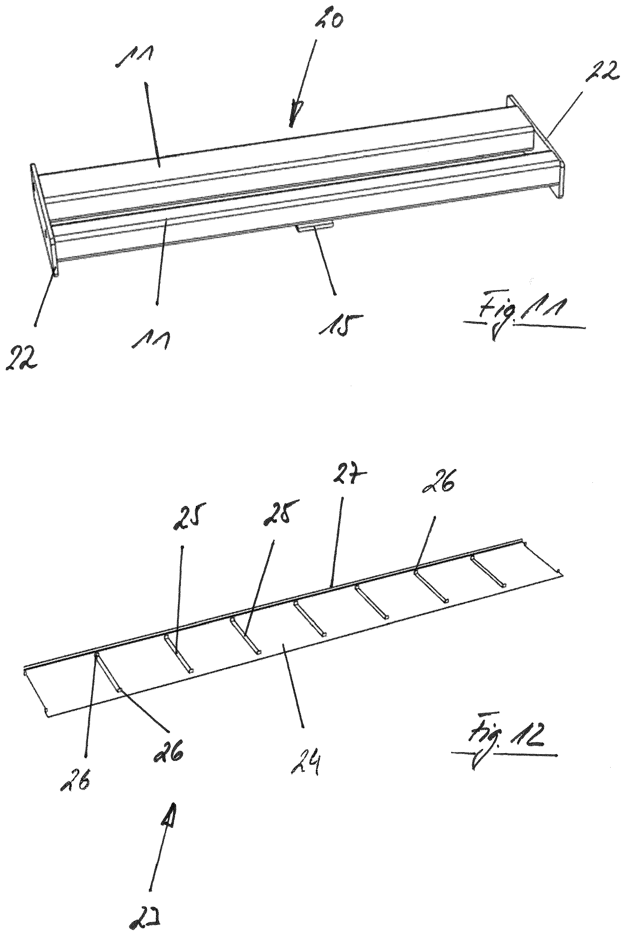

Die Ausgestaltung der U-förmig ausgebildeten Grundkörper 6 aus jeweils zwei L-förmig ausgebildeten Basiskörper 19 hat zudem den Vorteil, die U-förmig ausgebildeten Grundkörper 6 in Längsrichtung der Tragelemente 7 verlängern zu können. Zu diesem Zweck ist ein Verlängerungselement 20 vorgesehen, wie es in Figur 11 dargestellt ist. Dieses Verlängerungselement 20 ist korrespondierend zu einem Tragelement 7 ausgebildet und verfügt über zwei im Querschnitt rechteckförmig ausgebildete Rohre 11, die einendseitig wie anderendseitig jeweils an ein Verbindungsstück 22 angeschlossen sind. Ein Verbindungsstück 22 ist beispielsweise als Flachmaterial ausgebildet, wie in Figur 11 dargestellt. Zur Verbindung der Rohre 11 mit den Verbindungsstücken 22 kann eine Schweißverbindung vorgesehen sein. Alternativ ist ein Verschrauben möglich.

Zur Verlängerung eines Grundkörpers 6 in Längsrichtung eines Tragelements 7 ist zwischen zwei L-förmig ausgebildete Basiskörper 19 ein Verlängerungselement anzuordnen, wobei die körperseitigen Verbindungsstücke 20 mit den verlängerungsseitigen Verbindungsstücken 22 beispielsweise durch Verschrauben zu koppeln sind. Anstelle nur eines Verlängerungselements 20 können natürlich auch mehrere Verlängerungselemente 20 zwischen zwei L-förmig ausgebildeten Basiskörpern 19 angeordnet sein.

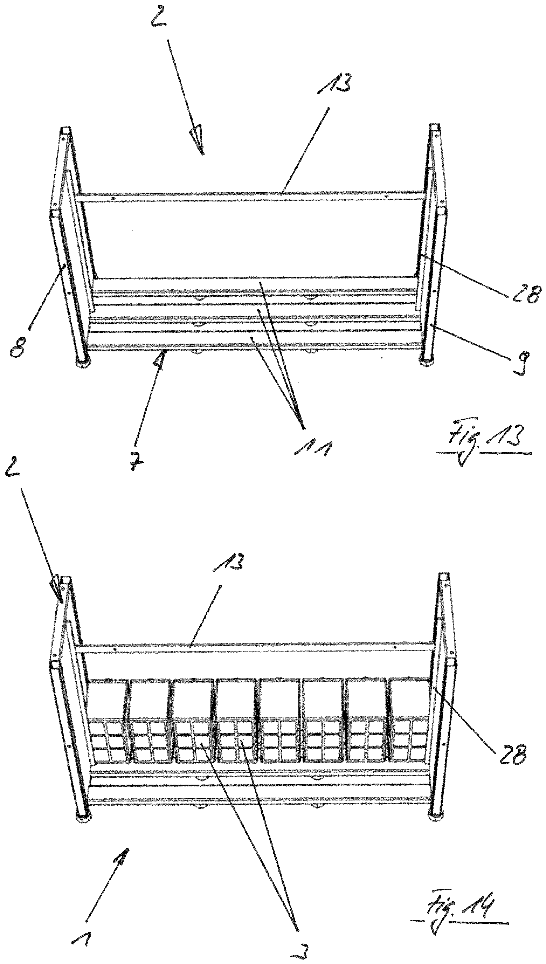

Für eine positionsrichtige und -sichere Anordnung von AGM-Batterien 3 innerhalb der Stapelhilfe 2 sind von den Wangen 8 und 9 jeweils als Anschläge dienende Fortsätze 28 bereitgestellt, wie beispielsweise Figur 13 erkennen lässt. Diesen Fortsätzen 28 liegt im bestimmungsgemäßen Verwendungsfall eine Positionierhilfe 23 an, wie sie in Figur 12 dargestellt ist. Dabei stößt die Positionierhilfe 23 mit Bezug auf die Zeichnungsebene nach Figur 13 linksseitig an den von der Wange 8 bereitgestellten Fortsatz 28 einerseits und anderendseitig an den von der Wange 9 bereitgestellten Fortsatz 28 andererseits an.

Wie die Darstellung nach Figur 12 erkennen lässt, ist die Positionierhilfe 23 nach Art einer Platte 24 ausgebildet. Diese verfügt an ihrer mit Bezug auf die Zeichnungsebene nach Figur 12 hinteren Randkante über einen als Anschlag dienenden Fortsatz 27. An diesem Fortsatz 27 kommen im endmontierten Zustand die jeweils von einer Positionierhilfe 23 aufgenommenen AGM-Batterien 3 zur Anlage, wie dies die Darstellung nach beispielsweise Figur 14 erkennen lässt.

Zur Beabstandung der von einer Positionierhilfe 23 aufgenommenen AGM-Batterien 3 verfügt die Positionierhilfe 23 des Weiteren über Abstandshalter 26. Zudem ist die Positionierhilfe 23 mit Schlitzen 25 ausgerüstet, was im bestimmungsgemäßen Verwendungsfall eine Luftzirkulation zwischen benachbarten AGM-Batterien 3 zwecks Kühlung zulässt.

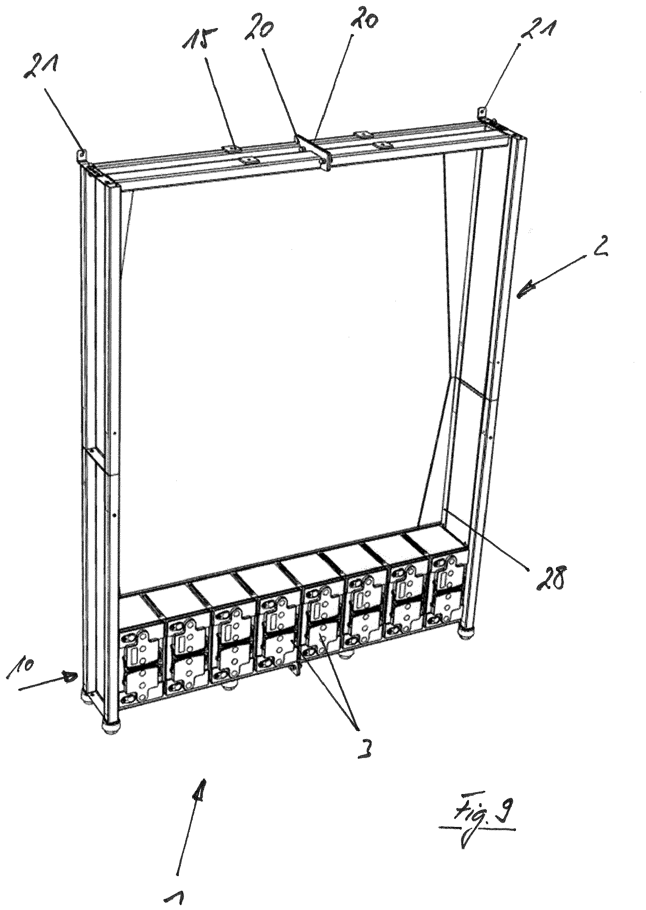

Für eine Wandbefestigung der erfindungsgemäßen Stapelhilfe 2 können zudem Wandbefestigungen 21 vorgesehen sein, wie dies beispielsweise die Darstellung nach Figur 9 erkennen lässt.

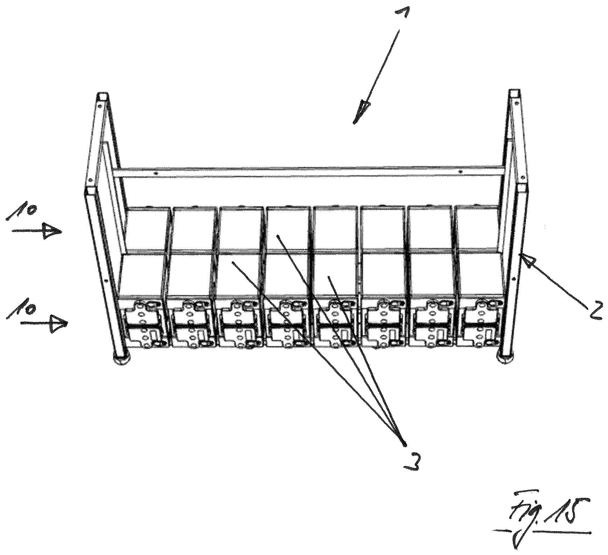

Die Figuren 13 bis 15 zeigen eine dritte Ausführungsform. Gemäß dieser Ausführungsform ist die Stapelhilfe 2 als doppelreihige Stapelhilfe 2 ausgebildet, d. h. sie dient der Aufnahme von in Tiefenrichtung der Stapelhilfe 2 zwei Reihen 10 an AGM-Batterien 3, wie dies insbesondere eine Zusammenschau der Figuren 14 und 15 erkennen lässt.

Zur Aufnahme einer doppelten Reihe 10 von AGM-Batterien 3 ist gemäß dieser Ausführungsform vorgesehen, dass ein Tragelement 7 nicht nur über zwei, sondern über drei im Querschnitt rechteckförmige Rohre 11 verfügt, wie dies insbesondere die Darstellung in Figur 13 erkennen lässt.

### Bezugszeichen

| | | | |
|---|---|---|---|
| 1 | System | 17 | Abschnitt |
| 2 | Stapelhilfe | 18 | Abschnitt |
| 3 | AGM-Batterie | 19 | Basiskörper |
| 4 | Gehäuse | 20 | Verbindungsstück |
| 5 | Erste Seitenwand | 21 | Wandbefestigung |
| 6 | Grundkörper | 22 | Verlängerungselement |
| 7 | Tragelement | 23 | Positionierhilfe |
| 8 | Wange | 24 | Platte |
| 9 | Wange | 25 | Schlitz |
| 10 | Reihe | 26 | Abstandshalter |
| 11 | Rohr | 27 | Fortsatz |
| 12 | Rohrlängsrichtung | 28 | Fortsatz |
| 13 | Versteifungselement | 29 | Verbindungsmittel |
| 14 | Abstandshalter | 30 | Stirnseite |
| 15 | Verbindungsanschluss | 31 | Stirnseite |
| 16 | Höhenrichtung | | |

## Patentansprüche

1. System bestehend aus einer Stapelhilfe (2) und einer Mehrzahl von in der Stapelhilfe (2) angeordneten AGM-Batterien (3), wobei eine AGM-Batterie (3) ein Gehäuse (4) mit ersten Seitenwänden (5) und im Gehäuse (4) angeordnete Elektrodenplatten aufweist, wobei die ersten Seitenwände (5) und die Elektrodenplatten parallel verlaufend ausgerichtet sind, wobei die Stapelhilfe (2) einen U-förmig ausgebildeten Grundkörper (6) aufweist, der über ein Tragelement (7) und zwei orthogonal hierzu ausgerichtete Wangen (8, 9) aufweist, wobei die Wangen (8, 9) das Tragelement (7) zwischen sich aufnehmen, das einendseitig an der einen Wange (8) und anderendseitig an der anderen Wange (9) angeordnet ist, wobei das Tragelement (7) eine Mehrzahl von in Reihen (10) übereinander angeordneten AGM-Batterien (3) aufnimmt, wobei sowohl das Tragelement (7), als auch die ersten Seitenwände (5) der Gehäuse (4) der AGM-Batterien (3) horizontal verlaufend ausgerichtet sind, und wobei die Stapelhilfe (2) frei von weiteren an den Wangen (8, 9) angeordneten und AGM-Batterien (3) aufnehmenden Tragelementen (7) ausgebildet ist.

2. Stapelhilfe zur Aufnahme von AGM-Batterien (3), mit einem U-förmig ausgebildeten Grundkörper (6), der ein Tragelement (7) und zwei orthogonal hierzu ausgerichtete Wangen (8, 9) aufweist, wobei das Tragelement (7) dazu ausgebildet ist, eine Mehrzahl von in Reihen (10) übereinander angeordnete AGM-Batterien (3) aufzunehmen, wobei die Wangen (8, 9) das Tragelement (7) zwischen sich aufnehmen, das einendseitig an der einen Wange (8) und anderendseitig an der anderen Wange (9) angeordnet ist, und wobei die Stapelhilfe (2) frei von weiteren an den Wangen (8, 9) angeordneten und AGM-Batterien (3) aufnehmenden Tragelementen (7) ausgebildet ist.

3. System nach Anspruch 1 oder Stapelhilfe nach Anspruch 2, **dadurch gekennzeichnet, dass** das Tragelement (7) zwei im Querschnitt rechteckförmige Rohre (11) aufweist, die parallel verlaufend ausgerichtet und in einer Richtung quer zur Rohrlängsrichtung (12) voneinander beabstandet angeordnet sind.

4. System oder Stapelhilfe nach einem der vorhergehenden Ansprüche, **dadurch gekennzeichnet, dass** sich der U-förmig ausgebildete Grundkörper (6) aus zwei L-förmig ausgebildeten Basiskörpern (19) zusammensetzt, wobei ein Basiskörper (19) einen Abschnitt (17, 18) des Tragelements (7) und eine orthogonal hierzu ausgerichtete Wange (8, 9) aufweist, wobei der Abschnitt (17, 18) des Tragelements (7) einendseitig an der Wange (8, 9) angeordnet ist.

5. System oder Stapelhilfe nach Anspruch 4, **dadurch gekennzeichnet, dass** der Abschnitt (17, 18) des Tragelements (7) anderendseitig an einem Verbindungsstück (20) angeordnet ist.

6. System oder Stapelhilfe nach Anspruch 4 oder 5, **dadurch gekennzeichnet, dass** der U-förmig ausgebildete Grundkörper (6) ein zum Tragelement (7) korrespondierend ausgebildetes Verlängerungselement (20) aufweist, wobei die beiden Abschnitte (17, 18) des Tragelements (7) das Verlängerungselement (20) zwischen sich aufnehmen, das einendseitig an dem einen Abschnitt (17) und anderendseitig an dem anderen Abschnitt (18) des Tragelements (7) angeordnet ist.

7. System oder Stapelhilfe nach einem der vorhergehenden Ansprüche, **dadurch gekennzeichnet, dass** ein Versteifungselement (13) vorgesehen ist, das die beiden Wangen (8, 9) miteinander oder eine Wange (8, 9) mit dem Tragelement (7) verbindet.

8. System oder Stapelhilfe nach einem der vorhergehenden Ansprüche, **dadurch gekennzeichnet, dass** eine Wange (8, 9) einen in Richtung der anderen Wange (8, 9) weisenden Fortsatz (28) aufweist, der als Anschlag für eine Positionierhilfe (23) dient.

9. System oder Stapelhilfe nach einem der vorhergehenden Ansprüche, **dadurch gekennzeichnet, dass** zwischen zwei in Höhenrichtung (16) aufeinander nachfolgenden Reihen (10) von AGM-Batterien (3) eine Positionierhilfe (23) angeordnet ist.

10. System oder Stapelhilfe nach Anspruch 9, **dadurch gekennzeichnet, dass** die Positionierhilfe (23) eine mit einem als Anschlag dienenden Fortsatz (27) ausgerüstete Platte (24) ist.

11. System oder Stapelhilfe nach einem der vorhergehenden Ansprüche, **dadurch gekennzeichnet, dass** die Stapelhilfe (2) zwei U-förmig ausgebildete Grundkörper (6) aufweist, die in Höhenrichtung (16) übereinander angeordnet sind, wobei die dem Tragelement (7) gegenüberliegenden Endabschnitte der Wangen (8, 9) des einen Grundkörpers (6) den dem Tragelement (7) gegenüberliegenden Endabschnitten der Wangen (8, 9) des anderen Grundkörpers (6) zugewandt sind, sodass ein umlaufend geschlossenes Rahmenelement ausgebildet ist.

12. System oder Stapelhilfe nach einem der vorhergehenden Ansprüche, **dadurch gekennzeichnet, dass** die beiden U-förmigen Grundkörper (6) in Höhenrichtung (16) zueinander verstellbar angeordnet sind.

13. System oder Stapelhilfe nach Anspruch 12, **dadurch gekennzeichnet, dass** die Wangen (8, 9) der übereinander angeordneten Grundkörper (6) über die jeweiligen einander zugewandten Stirnseiten (30) zugängliche Kanäle (31) zur Aufnahme von Verbindungsmitteln (29) aufweisen.

14. System oder Stapelhilfe nach einem der vorhergehenden Ansprüche, **dadurch gekennzeichnet, dass** die tragelementseitigen Stirnseiten der Wangen (8, 9) und/oder die Tragelemente (7) auf ihrer den Wangen (8, 9) abgewandten Flachseite Verbindungsanschlüsse (15) zur lösbaren Anordnung von Abstandshaltern (14) aufweisen.

## Geänderte Patentansprüche

### Geänderte Patentansprüche gemäss Regel 137(2) EPÜ.

1. System bestehend aus einer Stapelhilfe (2) und einer Mehrzahl von in der Stapelhilfe (2) angeordneten AGM-Batterien (3), wobei eine AGM-Batterie (3) ein Gehäuse (4) mit ersten Seitenwänden (5) und im Gehäuse (4) angeordnete Elektrodenplatten aufweist, wobei die ersten Seitenwände (5) und die Elektrodenplatten parallel verlaufend ausgerichtet sind, wobei die Stapelhilfe (2) einen U-förmig ausgebildeten Grundkörper (6) aufweist, der über ausschließlich ein Tragelement (7) zur Aufnahme der AGM-Batterien (3) und zwei orthogonal hierzu ausgerichtete Wangen (8, 9) verfügt, wobei die Wangen (8, 9) das Tragelement (7) zwischen sich aufnehmen, wobei das Tragelement (7) eine Mehrzahl von in Reihen (10) übereinander angeordneten AGM-Batterien (3) aufnimmt, wobei sowohl das Tragelement (7), als auch die ersten Seitenwände (5) der Gehäuse (4) der AGM-Batterien (3) horizontal verlaufend ausgerichtet sind und wobei die Stapelhilfe (2) frei von weiteren an den Wangen (8, 9) kraftübertragend angeordneten und AGM-Batterien (3) aufnehmenden Tragelementen (7) ausgebildet ist
**dadurch gekennzeichnet,**
**dass** die Wangen (8, 9) dazu eingerichtet sind, keine tragende Funktion zu übernehmen und ausschließlich als seitlicher Schutz für die von dem Tragelement (7) aufgenommenen AGM-Batterien (3) zu dienen.

2. Stapelhilfe zur Aufnahme von AGM-Batterien (3), mit einem U-förmig ausgebildeten Grundkörper (6), der ausschließlich ein Tragelement (7) und zwei orthogonal hierzu ausgerichtete Wangen (8, 9) aufweist, wobei das Tragelement (7) dazu ausgebildet ist, eine Mehrzahl von in Reihen (10) übereinander angeordnete AGM-Batterien (3) aufzunehmen, wobei die Wangen (8, 9) das Tragelement (7) zwischen sich aufnehmen, wobei die Stapelhilfe (2) frei von weiteren an den Wangen (8, 9) kraftübertragend angeordneten und AGM-Batterien (3) aufnehmenden Tragelementen (7) ausgebildet ist, **dadurch gekennzeichnet, dass** die Wangen (8, 9) dazu eingerichtet sind, keine tragende Funktion zu übernehmen und ausschließlich als seitlicher Schutz für die von dem Tragelement (7) aufgenommenen AGM-Batterien (3) zu dienen.
